# EUROPEAN PATENT SPECIFICATION

(11) **EP 4 623 225 B1**
(45) Date of publication and mention of the grant of the patent: **14.10.2026**
(21) Application number: 24702100.9
(22) Date of filing: 25.01.2024
(51) Int. Cl.: F16H 25/24

(54) **WIPER SEAL ASSEMBLY FOR A BALL SCREW ACTUATOR**
WISCHERDICHTUNGSANORDNUNG FÜR EINEN KUGELGEWINDETRIEB
ENSEMBLE JOINT D'ESSUIE-GLACE POUR ACTIONNEUR À VIS À BILLES

(30) Priority: 25.01.2023 US 202363481562 P; 22.01.2024 US 202418419518
(43) Date of publication of application: 01.10.2025
(73) Proprietor: Trelleborg Sealing Solutions U.S., Inc., Fort Wayne, IN 46803 (US); Trelleborg Sealing Solutions Germany GmbH, 70565 Stuttgart (DE)
(72) Inventor: HOTNOG, Tudor B., Lake Balboa, California 91406 (US)
(74) Representative: Kohler Schmid Möbus Patentanwälte
(86) International application number: PCT/EP2024/051700
(87) International publication number: WO 2024/156775

(56) References cited:
- EP-A1- 1 959 172
- JP-U- 3 238 897
- US-A1- 2008 196 523
- US-A1- 2015 042 045
- US-A1- 2015 233 457

## Description

### FIELD OF THE INVENTION

The present invention generally relates to seals. More particularly, the present invention relates to a ball screw seal for a ball screw actuator used in aerospace applications. A wiper seal assembly having the features of the preamble of claim 1 is known from US 2015/233457 A1. US 2015/233457 A1 discloses a wiper and scraper assembly, for a linear motion assembly, having a wiper and a scraper constructed from separate pieces of material. The wiper has a first helical thread received in the external groove of the nut. The scraper is disposed in an opening of the wiper and has a second helical thread received in the external groove of the nut.

### BACKGROUND OF THE INVENTION

Ball screw actuators need seals to seal grease within the actuator. Furthermore, these seals should be able to break externally formed ice while keeping external debris from ingressing (i.e., entering) into the actuator and other flight systems. Current solutions that have been designed are not fully successful in applications with high temperature variability and have had issues with drag, especially in low temperature applications where high drag is due to ball screw wiper material shrinkage. The present invention overcomes these drawbacks.
Prior art publication and patents include but are not limited to the following: EP 3 392 526 B1; EP 3 428 481 B1; US 4,905,533; US 10,612,633; KR 101 584 435 B1; US 697 639 9B2; JP 492 362 4B2; JP 492 362 4B2; US 201 403 524 70A1; JP 364 759 7B2; US 802 512 8B2; US 490 553 3A; and EP 3 428 481 B1.

### SUMMARY OF THE INVENTION

An embodiment of the present invention is a wiper seal assembly 10 configured for sealing a ball screw actuator 11. A wiper element 12 is annularly disposed about a longitudinal axis 13. The wiper element defines a front side 14 opposite a back side 15, the front and back sides being generally perpendicular to the longitudinal axis. The wiper element further defines an outside circumferential surface 16 opposite an inside circumferential surface 17, the outside and inside circumferential surfaces being generally parallel with longitudinal axis. The inside circumferential surface comprises a first helically shaped extension 18 extending towards the longitudinal axis, where the first helically shaped extension is configured to be disposed within a roller ball screw thread 19 of a shaft 20 of the ball screw actuator, and where the shaft is configured to be aligned along the longitudinal axis. At least a portion 21 of the first helically shaped extension comprises a plurality of micro-grooves 22 formed on the inside circumferential surface, wherein the plurality of micro-grooves is configured to make contact with the roller, i.e., the ball screw thread of the shaft of the ball screw actuator.

An ice breaker element 23 is annularly disposed about the longitudinal axis. The ice breaker element defines a front side 24 opposite a back side 25, the front and back sides being generally perpendicular to the longitudinal axis. The ice breaker element defining an outside circumferential surface 26 opposite an inside circumferential surface 27, the outside and inside circumferential surfaces being generally parallel with longitudinal axis. The inside circumferential surface comprises a second helically shaped extension 28 extending towards the longitudinal axis, wherein the second helically shaped extension is configured to be disposed within the roller ball screw thread of the shaft of the ball screw actuator. The second helically shaped extension extends to the front side of the ice breaker element forming an ice breaker lip 29. The wiper element is disposed adjacent to the ice breaker element with the back side of the wiper element being adjacent to the back side of the ice breaker element. The wiper element and ice breaker element are mechanically locked in rotation in comparison to one another.

In another exemplary embodiment, the plurality of micro-grooves may be adjacently disposed next to one another, each micro-groove of the plurality of micro-grooves being annularly disposed about the longitudinal axis and not following a helical profile 30. In other words, each micro-groove is annularly shaped and disposed next to another annularly shaped micro-groove.

In another exemplary embodiment, the plurality of micro-grooves may follow a helical profile 30 that is in a similar helical direction 31 in comparison to the first helically shaped extension. Alternatively, the plurality of micro-grooves may follow a helical profile 30 that is in an opposite helical direction 32 in comparison to the first helically shaped extension.

In another exemplary embodiment, the first helically shaped extension may be helically aligned in comparison to the second helically shaped extension, wherein both the first and second helically shaped extensions are configured to be disposed within the roller ball screw thread of the shaft of the ball screw actuator.

In another exemplary embodiment, an edge 33 of the ice breaker lip may be configured to be at or less than 0.012 inches (0,30 millimeters) from the roller ball screw thread of the shaft of the ball screw actuator.

In another exemplary embodiment, the front side of the wiper element may include an annular channel 34 formed therein disposed about the longitudinal axis. An annularly shaped metallic spring element 35 may be disposed within the annular channel. The spring element may comprise a flat ribbon coil spring 36. The spring element may comprise a U-shape 37 in cross section, wherein an open top 38 of the U-shape is pointing along the longitudinal axis and away from the back side of the wiper element. The front side of the wiper element may comprise an outer diameter grease sealing lip 39 and an inner diameter grease sealing lip 40 separated by the annular channel.

The wiper element and the ice breaker element may not be of the same materials. The wiper element may comprise PTFE, unfilled PTFE, blended PTFE, glass moly filled PTFE, PEEK and/or thermoplastic material. The ice breaker element may comprise aluminum bronze and/or stainless steel.

The wiper seal assembly may be installed between an outer housing 41 and the shaft of the ball screw actuator, where the front side of the wiper element is configured to be disposed towards a grease side 42 and the front side of the ice breaker element is configured to be disposed towards an environmental side 43.

At least (two) one finger(s) 44 may extend parallel to the longitudinal axis from the back side of the ice breaker element towards the wiper element. At least one recess 45 may be formed in the back side of the wiper element, wherein the at least one finger of the ice breaker element is disposed within the at least one recess of the wiper element and mechanically locks in rotation the wiper element in comparison to the ice breaker element.

At least (two) one tab(s) 46 may extend radially to the longitudinal axis from the outside circumferential surface of the ice breaker element, wherein the at least one tab is configured to be disposed within at least one recess 47 formed in an outer housing 41 and mechanically locks in rotation the ice breaker element in comparison to the outer housing.

### BRIEF DESCRIPTION OF THE DRAWINGS

The accompanying drawings illustrate the invention. In such drawings:
FIGURE 1 is an isometric view of an embodiment of a wiper seal assembly of the present invention;
FIGURE 2 is another isometric view of the structure of FIG. 1 taken from a rearward viewpoint;
FIGURE 3 is an isometric view of just the wiper element from the structure of FIG. 1;
FIGURE 4 is another isometric view of the structure of FIG. 3 taken from a rearward viewpoint;
FIGURE 5 is an isometric view of just the ice breaker element from the structure of FIG. 1;
FIGURE 6 is another isometric view of the structure of FIG. 5 taken from a rearward viewpoint;
FIGURE 7 is a sectional view taken from the structure of FIG. 1 along lines 7-7;
FIGURE 8 is a side view of the sectional view of FIG. 7;
FIGURE 9 is an isometric and enlarged view of the structure of FIG. 7 now including a shaft of the ball screw actuator;
FIGURE 10 is a side view of the structure of FIG. 9;
FIGURE 11 is an isometric and enlarged view of the structure of FIG. 7 similar to that of FIG. 9, now including an outer housing of the ball screw actuator;
FIGURE 12 is a side view of the structure of FIG. 11;
FIGURE 13 is an enlarged view of the structure of FIG. 12 better showing the plurality of micro-grooves of the seal element;
FIGURE 14A is a theoretical plan view of the inside circumferential surface of the wiper element with no micro-grooves;
FIGURE 14B is the structure of FIG. 14A showing one embodiment of how micro-grooves could be disposed on the flat and helical portions of the inside circumferential surface of the wiper element;
FIGURE 14C is the structure of FIG. 14A showing another embodiment of how micro-grooves could be disposed on the flat and helical portions of the inside circumferential surface of the wiper element;
FIGURE 14D is the structure of FIG. 14A showing another embodiment of how micro-grooves could be disposed on the flat and helical portions of the inside circumferential surface of the wiper element;
FIGURE 14E is the structure of FIG. 14A showing another embodiment of how micro-grooves could be disposed on the flat and helical portions of the inside circumferential surface of the wiper element; and
FIGURE 14F is the structure of FIG. 14A showing another embodiment of how micro-grooves could be disposed on the flat and helical portions of the inside circumferential surface of the wiper element.

### DETAILED DESCRIPTION OF EMBODIMENTS OF THE INVENTION

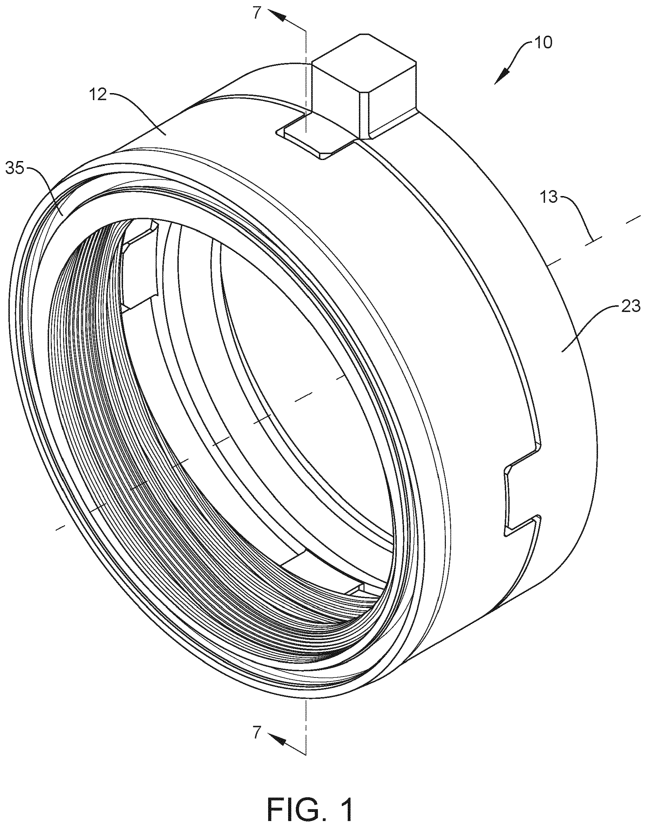

Reference is now made to FIGURES 1-13 of the provisional application 63/481,562. The present invention is an easy to install press fit seal that has a spring energized outer diameter grease sealing lip and low temperature ice breaking lip on the back end. The present invention is designed as a two-piece solution to avoid locking issues. The seal is designed to be reliable in low torque and low temp solutions. The invention includes a ball screw wiper energized by a metallic "U" shape spring, or a metallic flat ribbon coil spring is to assist PTFE sealing element to provide low temperature sealing on the ball nut housing.

The purpose of having a metallic ice breaker on the back of the sealing wiper is protect the PTFE sealing element by break the ice from formed on the screw when the screw is rotating. The ball screw wiper and an ice breaker are mechanically locked by a numbers of ice breaker fingers that inserted on same numbers of grooves machined on the back of ball screw wiper component. The ball screw wiper and ice breaker are in perfect timing to eliminate the possibility of the ice breaker to act like a lock nut. This feature is created by positioning of a timing feature created by one of locking finger element.

One feature of this invention is the mini-grooves across the entire wiper seal inside profile providing multiple wipers and reducing wiper seal component friction torque at low temperature due to reducing wiper seal surface contact area.

FIGURE 1 is a front isometric view of the seal of the present invention. As shown are a first part being a PTFE wiper seal component in light blue that is connected to a second part being an ice breaker component shown in tan. The PTFE seal component is mechanically locked with the ice breaker component by an equal number of seal wiper heel grooves and ice breaker fingers. The mechanical locking feature is not a press fit and it is a loose fit. Depending on the application requirement, the wiper seal material could be unfilled PTFE, blended PTFE and/or thermoplastic material.

This sealing element has a positive sealing of the ball screw housing due to seal outside configuration. The inside seal profile due to the screw configuration "seal" profile looks like a thread. In the other words, it is not a closed loop and that why is called a wiper seal because it is pushing the grease inside the ball screw housing.

The wiper assembly shown in FIG. 1 is comprised by three components. First, there is the ball wiper seal. The material has a high percentage Glass Moly filled PTFE, or thermoplastic material such as PEEK to reduce wiper material shrinkage due to low temperature preventing increasing the ball screw torque.

Second, there is a metallic spring inside a cavity of the wiper seal configured to prevent wiper outer diameter shrinkage causing external leakage. The spring element installed inside the wiper seal is pushing equally outside and inside the wiper seal. At low temperatures, the metallic spring component will prevent the wiper outside diameter from shrink. Metallic Spring materials used are 300 SST., 17-7PH SST or 17-4PH SST, Elgiloy Inconel.

Third, there is an ice breaker manufactured from aluminum bronze or stainless steel, to break the ice behind the wiper preventing ice particles and water getting into ball screw housing and thus damaging the ball bearings. Furthermore, an additional function of the ice breaker is to prevent the wiper seal from rotating with the ball screw shaft (i.e., antirotating). The wiper seal is mechanical locked via heel grooves with the ice breaker fingers. All wiper seal and ice breaker combinations are locked into the ball screw housing by the external ears or fingers that are going into housing provided grooves.

Additionally, the ice breaker has a higher clearance between the shaft screw and the ice breaker. The ice breaker should a higher clearance between the ball screw profile and the ice breaker inside profile to prevent the ice breaker inside profile from being in contact with the ball screw profile thereby scratching/damaging the ball screw profile during turning process.

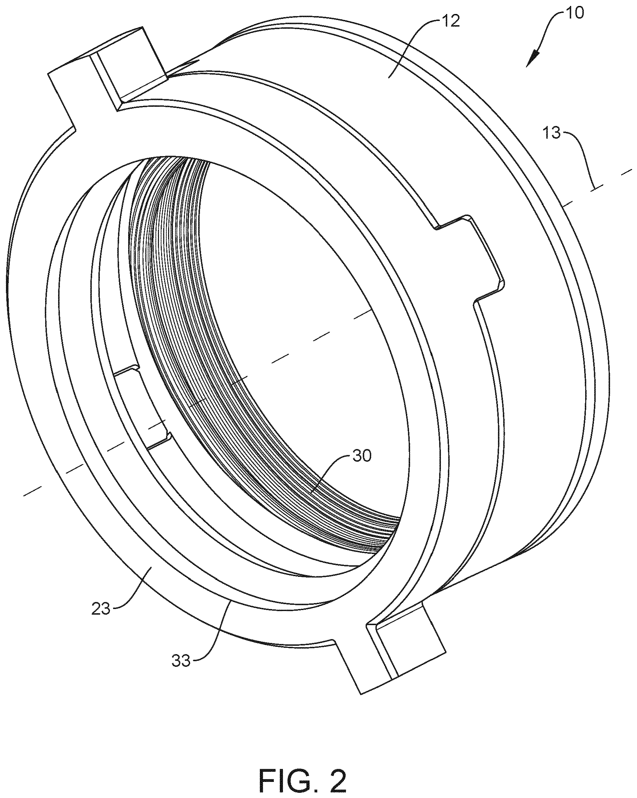

FIGURE 2 is a rear isometric view of the structure of FIG. 1.

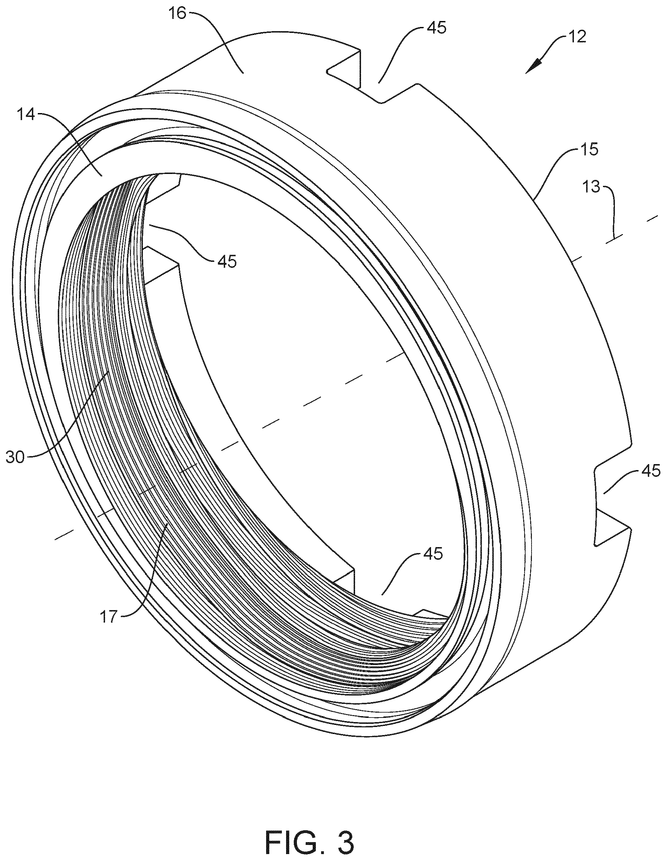

FIGURE 3 is a front isometric view of just the ball screw wiper.

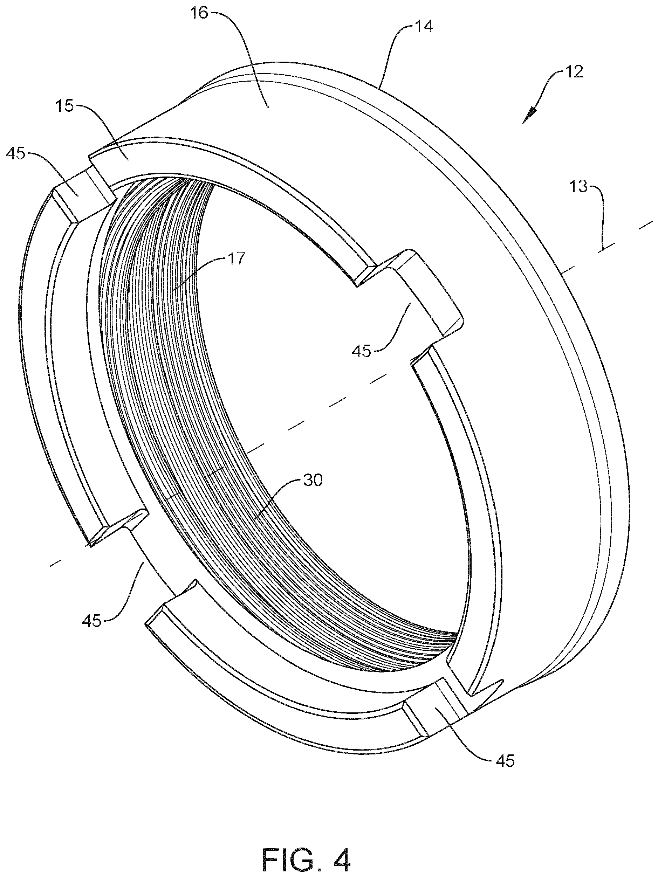

FIGURE 4 is a rear isometric view of the structure of FIG. 3.

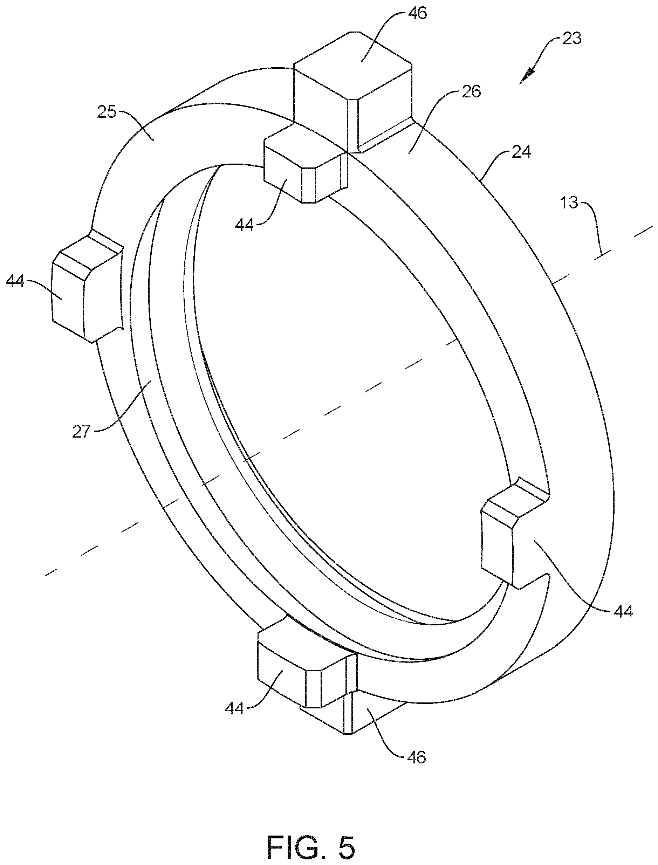

FIGURE 5 is a front isometric view of just the ice breaker. The ice breaker shown here has four locking fingers and two radial tabs to lock inside the ball screw housing preventing the wiper seal and ice breaker to turn with the ball screw. Here, one can see that there are two protrusions (i.e., tabs) extending radially from the outer diameter surface of the part. These two protrusions are used to prevent the wiper seal and ice breaker to turn with the ball screw. Furthermore, there are four protrusions (i.e., fingers) that extend parallel to the longitudinal axis. These four protrusions are matched to fit within recesses in the first part. Therefore, both components are configured to lock together in a loose fit with perfect timing feature.

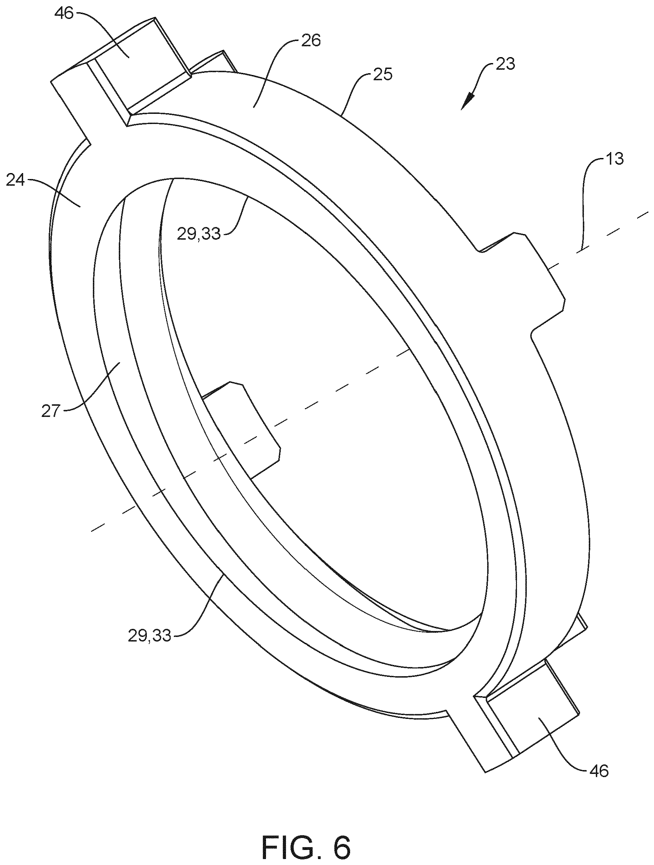

FIGURE 6 is a rear isometric view of the structure of FIG. 5.

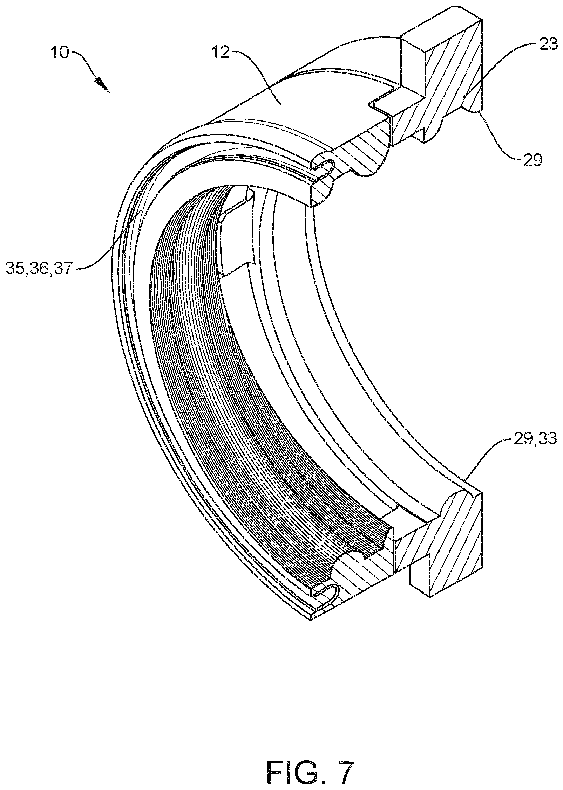

FIGURE 7 is a sectional view taken through FIG. 1. This image is showing a cross sectional view with the complete wiper seal/ice breaker and spring assembly. One can also see the mini-groove configuration which is a novel feature of the present invention.

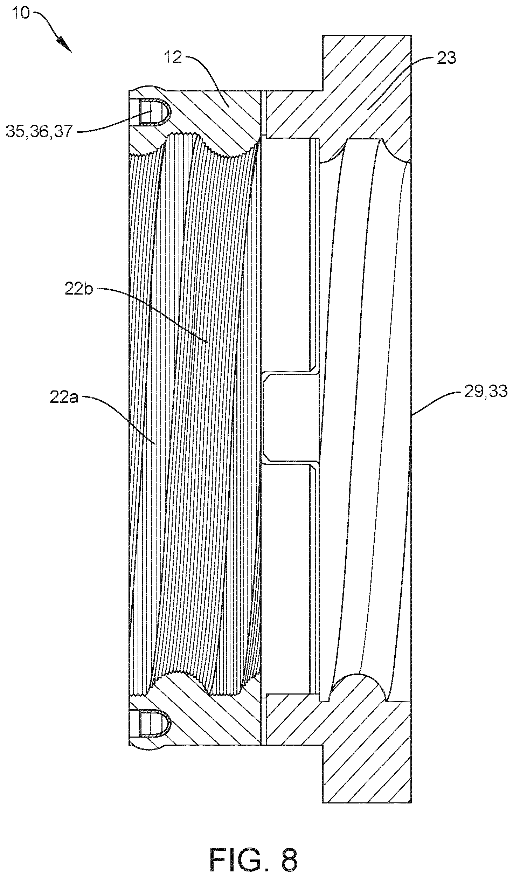

FIGURE 8 is a side view of the structure of FIG. 7.

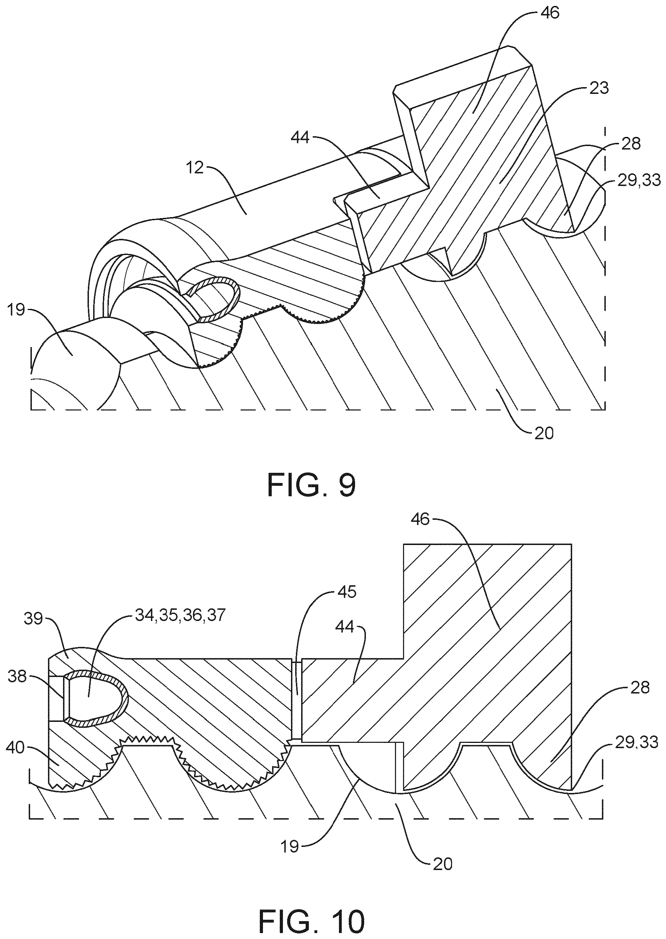

FIGURE 9 is an enlarged sectional view similar to FIG. 7 now showing a cross sectional view of the present invention where one can better see the mini-grooves formed as part of the ball screw wiper. FIGURE 10 is a side view of the structure of FIG. 9.

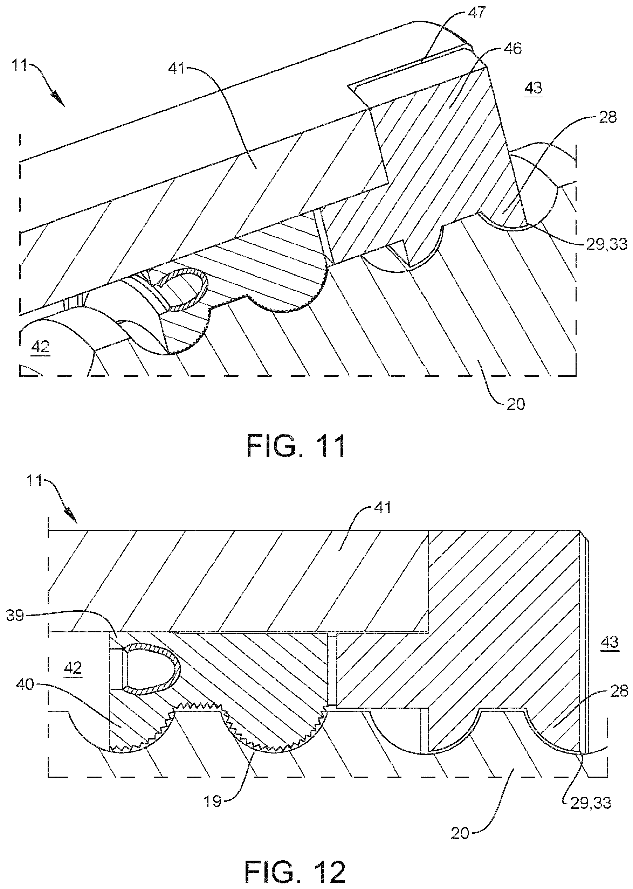

FIGURE 11 is enlarged sectional view similar to FIG. 9 now showing the assembly installed in a ball seal actuator housing. FIGURE 12 is a side view of the structure of FIG. 11. FIGS. 11 and 12 show the complete wiper seal/ice breaker and spring assembly over the ball screw.

It has been known to use mini-grooves on flat seal surfaces. However, it is not known to use mini-grooves on the feature of the wiper thread profile which in this case is a roller ball screw thread. When the inner diameter screw is turning in one direction then part of thread profile will be in full contact with the shaft screw profile thus increasing the torque value. Adding mini-grooves will reduce wiper contact by half.

The mini-grooves of the present invention may follow a helix thread profile, that is either in the same helix as the ball screw thread (or in the opposite direction as the ball screw thread). Alternatively, the mini-grooves may be annularly aligned whereas the ball screw thread will have the helix head profile. Furthermore, the mini-grooves may be aligned to follow the ball screw thread helix thread profile. As can be appreciated by those skilled in the art, a large variety of mini-groove thread profiles are possible.

A second benefit of the mini-grooves is also a wiping effect because they are like multiple scraping lips, such that the contaminants from the environment will have a harder time penetrating inside the ball screw wiper assembly and likewise grease will have a harder time escaping from the ball screw wiper assembly.

Reference is now being made to the figures of the present application which are very similar to the figures of the '562 provisional application. FIGURES 1-13 of the present application illustrate an embodiment of the present invention, which is a wiper seal assembly 10 configured for sealing a ball screw actuator 11 best seen in FIGS. 11-21.

As best seen in FIGS. 3 and 4, a wiper element 12 is annularly disposed about a longitudinal axis 13. The wiper element defines a front side 14 opposite a back side 15. The front and back sides are generally perpendicular to the longitudinal axis. The wiper element further defines an outside circumferential surface 16 opposite an inside circumferential surface 17. The outside and inside circumferential surfaces are generally parallel with longitudinal axis.

As best seen in FIGS. 11-13, the inside circumferential surface comprises a first helically shaped extension 18 extending towards the longitudinal axis. The first helically shaped extension is configured to be disposed within a roller ball screw thread 19 of a shaft 20 of the ball screw actuator, where the shaft is configured to be aligned along the longitudinal axis. At least a portion 21 of the first helically shaped extension comprises a plurality of micro-grooves 22 formed on the inside circumferential surface. The plurality of micro-grooves is configured to make contact with the roller ball screw thread of the shaft of the ball screw actuator.

As best seen in FIGS. 5 and 6, an ice breaker element 23 is annularly disposed about the longitudinal axis. The ice breaker element defines a front side 24 opposite a back side 25. The front and back sides are generally perpendicular to the longitudinal axis. The ice breaker element further defines an outside circumferential surface 26 opposite an inside circumferential surface 27. The outside and inside circumferential surfaces are generally parallel with longitudinal axis.

As best seen in FIGS. 11-12, the inside circumferential surface comprises a second helically shaped extension 28 extending towards the longitudinal axis. The second helically shaped extension is configured to be disposed within the roller ball screw thread of the shaft of the ball screw actuator.

As shown in FIG. 6, the second helically shaped extension extends to the front side of the ice breaker element forming an ice breaker lip 29. The wiper element is disposed adjacent to the ice breaker element with the back side of the wiper element being adjacent to the back side of the ice breaker element. The wiper element and ice breaker element are mechanically locked in rotation in comparison to one another as will be further explained below.

The plurality of micro-grooves may be adjacently disposed next to one another, where each micro-groove of the plurality of micro-grooves is annularly disposed about the longitudinal axis and not following a helical profile 30. In another exemplary embodiment, the plurality of micro-grooves may follow a helical profile 30 that is in a similar helical direction 31 in comparison to the first helically shaped extension. Alternatively, the plurality of micro-grooves may follow a helical profile 30 that is in an opposite helical direction 32 in comparison to the first helically shaped extension.

Both the first and second helically shaped extensions are disposed within the same roller ball screw thread. Thus, the first helically shaped extension is helically aligned in comparison to the second helically shaped extension, wherein both the first and second helically shaped extensions are configured to be disposed within the roller ball screw thread of the shaft of the ball screw actuator.

Referring to FIG. 10, an edge 33 of the ice breaker lip may be configured to be at or less than 0.012 inches (0,30 millimeters) from the roller ball screw thread of the shaft of the ball screw actuator. The edge 33 should not come into contact with the roller ball screw thread but should be very close such that any debris and/or ice can be scraped off.

Referring to FIG. 10, the front side of the wiper element may include an annular channel 34 formed therein disposed about the longitudinal axis. An annularly shaped metallic spring element 35 may be disposed within the annular channel. The spring element may comprise a flat ribbon coil spring 36. The spring element may comprise a U-shape 37 in cross section, wherein an open top 38 of the U-shape is pointing along the longitudinal axis and away from the back side of the wiper element.

Due to the annular channel 34, the front side of the wiper element is split into two halves, where it has an outer diameter grease sealing lip 39 and an inner diameter grease sealing lip 40 separated by the annular channel. The spring elements 35 can then either push the lip 39 up into the outer housing, push the lip 40 down into the shaft or do both.

The wiper element and the ice breaker element may not be of the same materials. The wiper element may comprise PTFE, unfilled PTFE, blended PTFE, glass moly filled PTFE, PEEK and/or thermoplastic material. The ice breaker element may comprise aluminum bronze and/or stainless steel.

The wiper seal assembly is installed between an outer housing 41 and the shaft of the ball screw actuator. The front side of the wiper element is configured to be disposed towards a grease side 42 and the front side of the ice breaker element is configured to be disposed towards an environmental side 43.

Referring to FIGS. 5-6, at least one finger 44 may extend parallel to the longitudinal axis from the back side of the ice breaker element towards the wiper element. Here, there are shown four fingers 44. One, two, three, four or any number of fingers could be used as will be understood by those skilled in the art.

Referring to FIGS. 3-4, at least one recess 45 may be formed in the back side of the wiper element. The at least one (two) finger(s) of the ice breaker element is disposed within the at least one recess of the wiper element and mechanically locks in rotation the wiper element in comparison to the ice breaker element. Similar to the fingers, the recesses 45 may be of one, two, three, four or any number of recesses as will be understood by those skilled in the art.

Referring again to FIGS. 5 and 6, at least one tab 46 may extend radially to the longitudinal axis from the outside circumferential surface of the ice breaker element. It is understood by those skilled in the art that one, two, three, four or any number of tabs could be used. The at least one tab is configured to be disposed within at least one recess 47 formed in an outer housing 41 as shown in FIG. 11 and mechanically locks in rotation the ice breaker element in comparison to the outer housing.

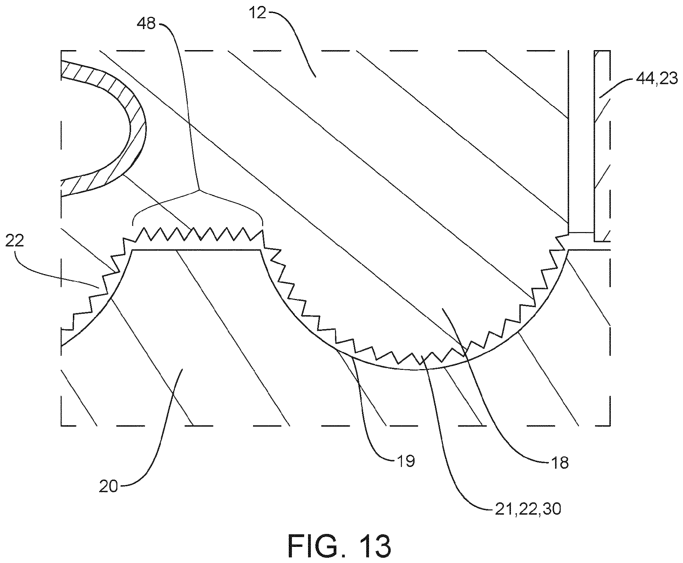

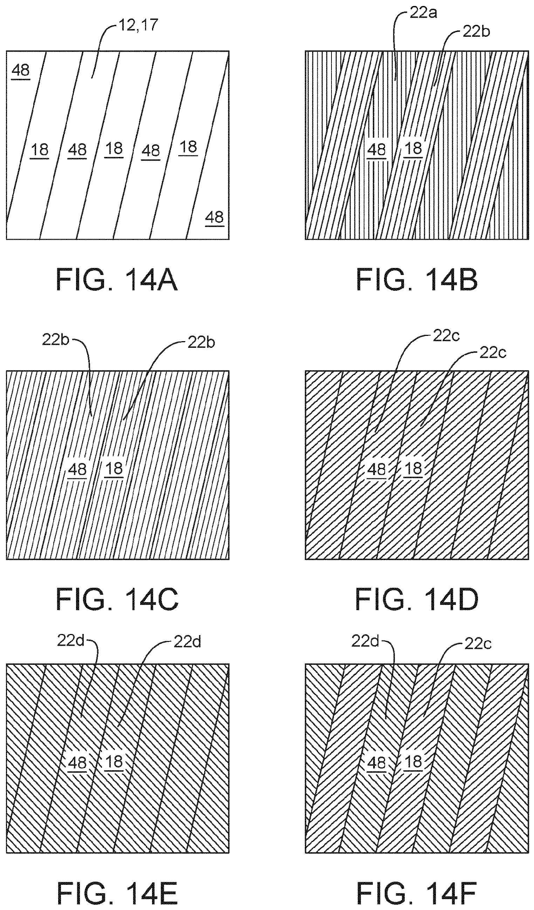

Referring to FIG. 13, the micro-grooves are formed along the first helically shaped extension 18 and they are also formed along the flat cylindrical portion 48. The micro-grooves may be shaped similar along the portions 18 and 48, or formed differently along the portions 18 and 48. FIGS. 14A-14F help illustrate some of the various embodiments the micro-grooves may take.

FIG. 14A is a simplified representation of what the inside circumferential surface 17 of the wiper element 12 would look like if it had no micro-grooves formed on its surface and it was cut in half and laid flat such that a plan view was visible. One can see from such a theoretical plan view that the forward leaning lines represent areas of the flat cylindrical portions 48 disposed alternatingly between the first helically shaped extensions 18, or as now described portions 18. This then forms the base of the structure that is further represented in the embodiments of FIGS. 14B-14F that do include a plurality of micro-grooves.

FIG. 14B shows an embodiment that represents what can best be seen in FIG. 8, where the micro-grooves 22a along the portion 48 have no pitch and are simply disposed adjacent to one another. The micro-grooves 22b along the portion 18 are pitched to match the pitch of the first helically shaped extension.

FIG. 14C shows another embodiment where the micro-grooves 22b are disposed the same whether they are along portion 18 or portion 48. Here, the micro-grooves are parallel to the pitch of the first helically shaped extension.

FIG. 14D shows another embodiment where the micro-grooves 22c are pitched more aggressively than the pitch of the first helically shaped extensions 18 along both portions 18 and 48.

FIG. 14E shows another embodiment where the micro-grooves 22d are pitched in an opposite direction in comparison to the first helically shaped extensions along both portions 18 and 48.

FIG. 14F shows another embodiment where the micro-grooves 22d along the portion 48 are in the opposite direction to the first helically shaped extensions. Then, the micro-grooves 22c are disposed more aggressively than the first helically shaped extensions along the portion 18. As will be understood by those skilled in the art, various embodiments may be made from the embodiments shown in FIGS. 14B-14F, as this teaching is not meant to be limited to just the embodiments shown and taught herein.

Although several embodiments have been described in detail for purposes of illustration, various modifications can be made without departing from the scope of the invention as defined in the accompanying claims.

### Numerals:

10 wiper seal assembly
11 ball screw actuator
12 wiper element
13 longitudinal axis
14 front side
15 back side
16 outside circumferential surface
17 inside circumferential surface
18 first helically shaped extension
19 roller ball screw thread
20 shaft
21 at least a portion
22 plurality of micro-grooves
23 ice breaker element
24 front side
25 back side
26 outside circumferential surface
27 inside circumferential surface
28 second helically shaped extension
29 ice breaker lip
30 helical profile
31 similar helical direction
32 opposite helical direction
33 edge, ice breaker lip
34 annular channel
35 spring element
36 flat ribbon coil spring
37 U-shape
38 open top
39 outer diameter grease sealing lip
40 inner diameter grease sealing lip
41 outer housing
42 grease side
43 environmental side
44 at least one finger
45 at least one recess
46 at least one tab
47 at least one recess
48 flat cylindrical portion

## Claims

1. A wiper seal assembly (10) configured for sealing a ball screw actuator (11), comprising:
a wiper element (12) annularly disposed about a longitudinal axis (13);
the wiper element (12) defining a front side (14) opposite a back side (15), the front and back sides (14, 15) being generally perpendicular to the longitudinal axis (13);
the wiper element (12) defining an outside circumferential surface (16) opposite an inside circumferential surface (17), the outside and inside circumferential surfaces (16, 17) being generally parallel with longitudinal axis (13);
wherein the inside circumferential surface (17) comprises a first helically shaped extension (18) extending towards the longitudinal axis (13), wherein the first helically shaped extension (18) is configured to be disposed within a roller ball screw thread (19) of a shaft (20) of the ball screw actuator (11), wherein the shaft (20) is configured to be aligned along the longitudinal axis (13); and
an ice breaker element (23) annularly disposed about the longitudinal axis (13);
the ice breaker element (23) defining a front side (24) opposite a back side (25), the front and back sides (24, 25) being generally perpendicular to the longitudinal axis (13);
the ice breaker element (23) defining an outside circumferential surface (26) opposite an inside circumferential surface (27), the outside and inside circumferential surfaces (26, 27) being generally parallel with longitudinal axis (13);
wherein the inside circumferential surface (27) comprises a second helically shaped extension (28) extending towards the longitudinal axis (13), wherein the second helically shaped extension (28) is configured to be disposed within the roller ball screw thread (19) of the shaft (20 of the ball screw actuator (11);
wherein the second helically shaped extension (28) extends to the front side (24) of the ice breaker element (23) forming an ice breaker lip (29);
wherein the wiper element (12) is disposed adjacent to the ice breaker element (23) with the back side (15) of the wiper element (12) being adjacent to the back side (25) of the ice breaker element (23); and
wherein the wiper element (12) and ice breaker element (23) are mechanically locked in rotation in comparison to one another;
**characterized in that**
at least a portion (21) of the first helically shaped extension (18) comprises a plurality of micro-grooves (22) formed on the inside circumferential surface (17), wherein the plurality of micro-grooves (22) is configured to make contact with the roller ball screw thread (19) of the shaft (20) of the ball screw actuator (11).

2. The wiper seal assembly (10) of claim 1, wherein the plurality of micro-grooves (22) is adjacently disposed next to one another, each micro-groove of the plurality of micro-grooves (22) being annular disposed about the longitudinal axis (13) and not following a helical profile.

3. The wiper seal assembly (10) of claim 1, wherein the plurality of micro-grooves (22) follow a helical profile (30) that is in a similar helical direction (31) in comparison to the first helically shaped extension (18).

4. The wiper seal assembly (10) of claim 1, wherein the plurality of micro-grooves (22) follow a helical profile (30) that is in an opposite helical direction (32) in comparison to the first helically shaped extension (18).

5. The wiper seal assembly (10) of claim 1, wherein the first helically shaped extension (18) is helically aligned in comparison to the second helically shaped extension (28), wherein both the first and second helically shaped extensions (18, 28) are configured to be disposed within the roller ball screw thread (19) of the shaft (20) of the ball screw actuator (11).

6. The wiper seal assembly (10) of claim 1, wherein an edge (33) of the ice breaker lip (29) is configured to be at or less than 0,30 millimeters from the roller ball screw thread (19) of the shaft (20) of the ball screw actuator (11).

7. The wiper seal assembly (10) of claim 1, wherein the front side of the wiper element (12) includes an annular channel (34) formed therein disposed about the longitudinal axis (13).

8. The wiper seal assembly (10) of claim 7, including an annularly shaped metallic spring element (35) disposed within the annular channel (34).

9. The wiper seal assembly (10) of claim 8, wherein the spring element (35) comprises a flat ribbon coil spring (36).

10. The wiper seal assembly (10) of claim 8, wherein the spring element comprises a U-shape (37) in cross section, wherein an open top (38) of the U-shape (37) is pointing along the longitudinal axis (13) and away from the back side (15) of the wiper element (12).

11. The wiper seal assembly (10) of claim 8, wherein the front side (14) of the wiper element (12) comprises an outer diameter grease sealing lip (39) and an inner diameter grease sealing lip (40) separated by the annular channel (34).

12. The wiper seal assembly (10) of claim 1, wherein the wiper element (12) and the ice breaker element (23) are not the same materials.

13. The wiper seal assembly (10) of claim 11, wherein the wiper element (12) comprises PTFE, unfilled PTFE, blended PTFE, glass moly filled PTFE, PEEK and/or thermoplastic material.

14. The wiper seal assembly (10) of claim 11, wherein the ice breaker element (23) comprises aluminum bronze and/or stainless steel.

15. The wiper seal assembly (10) of claim 1, wherein, when the wiper seal assembly (10) is installed between an outer housing (41) and the shaft (20) of the ball screw actuator (11), the front side (14) of the wiper element (12) is configured to be disposed towards a grease side (42) and the front side (24) of the ice breaker element (23) is configured to be disposed towards an environmental side (43).

16. The wiper seal assembly (10) of claim 1, including at least one finger (44) extending parallel to the longitudinal axis (13) from the back side (25) of the ice breaker element (23) towards the wiper element (12).

17. The wiper seal assembly (10) of claim 16, including at least one recess formed in the back side of the wiper element (12), wherein the at least one finger (44) of the ice breaker element (23) is disposed within the at least one recess (45) of the wiper element (12) and mechanically locks in rotation the wiper element (12) in comparison to the ice breaker element (23).

18. The wiper seal assembly (10) of claim 1, including at least one tab (46) extending radially to the longitudinal axis (13) from the outside circumferential surface (26) of the ice breaker element (23), wherein the at least one tab (46) is configured to be disposed within at least one recess (47) formed in an outer housing (41) and mechanically locks in rotation the ice breaker element (23) in comparison to the outer housing (41).

## Patentansprüche

1. Abstreiferdichtungsanordnung (10), die zum Abdichten eines Kugelgewindetriebs (11) ausgebildet ist, umfassend:
ein Abstreiferelement (12), das ringförmig um eine Längsachse (13) angeordnet ist;
wobei das Abstreiferelement (12) eine Vorderseite (14) gegenüberliegend einer Rückseite (15) definiert, wobei die Vorder- und Rückseite (14, 15) im Allgemeinen rechtwinklig zur Längsachse (13) verlaufen;
wobei das Abstreiferelement (12) eine äußere Umfangsfläche (16) gegenüberliegend einer inneren Umfangsfläche (17) definiert, wobei die äußere und die innere Umfangsfläche (16, 17) im Allgemeinen parallel zur Längsachse (13) verlaufen;
wobei die innere Umfangsfläche (17) eine erste spiralförmige Verlängerung (18) aufweist, die sich in Richtung der Längsachse (13) erstreckt, wobei die erste spiralförmige Verlängerung (18) so ausgebildet ist, dass sie innerhalb eines Rollkugel-Schraubgewindes (19) einer Welle (20) des Kugelgewindetriebs (11) angeordnet ist, wobei die Welle (20) so ausgebildet ist, dass sie entlang der Längsachse (13) ausgerichtet ist; und
ein Eiskratzerelement (23), das ringförmig um die Längsachse (13) angeordnet ist;
wobei das Eiskratzerelement (23) eine Vorderseite (24) gegenüberliegend einer Rückseite (25) definiert, wobei die Vorder- und Rückseite (24, 25) im Allgemeinen rechtwinklig zur Längsachse (13) verlaufen;
wobei das Eiskratzerelement (23) eine äußere Umfangsfläche (26) gegenüberliegend einer inneren Umfangsfläche (27) definiert, wobei die äußere und die innere Umfangsfläche (26, 27) im Allgemeinen parallel zur Längsachse (13) verlaufen;
wobei die innere Umfangsfläche (27) eine zweite spiralförmige Verlängerung (28) aufweist, die sich in Richtung der Längsachse (13) erstreckt, wobei die zweite spiralförmige Verlängerung (28) so ausgebildet ist, dass sie innerhalb des Rollkugel-Schraubgewindes (19) der Welle (20) des Kugelgewindetriebs (11) angeordnet ist;
wobei sich die zweite spiralförmige Verlängerung (28) bis zur Vorderseite (24) des Eiskratzerelements (23) erstreckt und eine Eiskratzerlippe (29) bildet;
wobei das Abstreiferelement (12) benachbart zum Eiskratzerelement (23) angeordnet ist, wobei die Rückseite (15) des Abstreiferelements (12) an die Rückseite (25) des Eiskratzerelements (23) angrenzt; und
wobei das Abstreiferelement (12) und das Eiskratzerelement (23) mechanisch gegeneinander drehfest verbunden sind;
**dadurch gekennzeichnet,**
**dass** zumindest ein Abschnitt (21) der ersten spiralförmigen Verlängerung (18) eine Vielzahl von Mikrorillen (22) umfasst, die an der inneren Umfangsfläche (17) ausgebildet sind, wobei die Vielzahl von Mikrorillen (22) so konfiguriert ist, dass sie mit dem Rollkugel-Schraubgewinde (19) der Welle (20) des Kugelgewindetriebs (11) in Eingriff kommen.

2. Abstreiferdichtungsanordnung (10) nach Anspruch 1, wobei die Vielzahl von Mikrorillen (22) nebeneinander angeordnet ist, wobei jede Mikrorille der Vielzahl von Mikrorillen (22) ringförmig um die Längsachse (13) angeordnet ist und keinem spiralförmigen Profil folgt.

3. Abstreiferdichtungsanordnung (10) nach Anspruch 1, wobei die Vielzahl von Mikrorillen (22) einem spiralförmigen Profil (30) folgt, das im Vergleich zu der ersten spiralförmigen Verlängerung (18) in eine ähnliche spiralförmige Richtung (31) verläuft.

4. Abstreiferdichtungsanordnung (10) nach Anspruch 1, wobei die Vielzahl von Mikrorillen (22) einem spiralförmigen Profil (30) folgt, das im Vergleich zu der ersten spiralförmigen Verlängerung (18) in einer entgegengesetzten spiralförmigen Richtung (32) verläuft.

5. Abstreiferdichtungsanordnung (10) nach Anspruch 1, wobei die erste spiralförmige Verlängerung (18) im Vergleich zur zweiten spiralförmigen Verlängerung (28) spiralförmig ausgerichtet ist, wobei sowohl die erste als auch die zweite spiralförmige Verlängerung (18, 28) so ausgebildet sind, dass sie innerhalb des Rollkugel-Schraubgewindes (19) der Welle (20) des Kugelgewindetriebs (11) angeordnet sind.

6. Abstreiferdichtungsanordnung (10) nach Anspruch 1, wobei eine Kante (33) der Eiskratzerlippe (29) so ausgebildet ist, dass sie einen Abstand von 0,30 Millimeter oder weniger zum Rollkugel-Schraubgewinde (19) der Welle (20) des Kugelgewindetriebs (11) aufweist.

7. Abstreiferdichtungsanordnung (10) nach Anspruch 1, wobei die Vorderseite des Abstreiferelements (12) einen darin ausgebildeten ringförmigen Kanal (34) aufweist, der um die Längsachse (13) angeordnet ist.

8. Abstreiferdichtungsanordnung (10) nach Anspruch 7, die ein ringförmiges metallisches Federelement (35) umfasst, das innerhalb des ringförmigen Kanals (34) angeordnet ist.

9. Abstreiferdichtungsanordnung (10) nach Anspruch 8, wobei das Federelement (35) eine flache Bandspiralfeder (36) umfasst.

10. Abstreiferdichtungsanordnung (10) nach Anspruch 8, wobei das Federelement im Querschnitt eine U-Form (37) aufweist, wobei eine offene Oberseite (38) der U-Form (37) entlang der Längsachse (13) und weg von der Rückseite (15) des Abstreiferelements (12) zeigt.

11. Abstreiferdichtungsanordnung (10) nach Anspruch 8, wobei die Vorderseite (14) des Abstreiferelements (12) eine Fettdichtlippe (39) am Außendurchmesser und eine Fettdichtlippe (40) am Innendurchmesser aufweist, die durch den ringförmigen Kanal (34) voneinander getrennt sind.

12. Abstreiferdichtungsanordnung (10) nach Anspruch 1, wobei das Abstreiferelement (12) und das Eiskratzerelement (23) nicht aus demselben Material bestehen.

13. Abstreiferdichtungsanordnung (10) nach Anspruch 11, wobei das Abstreifer element (12) PTFE, ungefülltes PTFE, gemischtes PTFE, mit Glas-Molybdän gefülltes PTFE, PEEK und/oder thermoplastisches Material umfasst.

14. Abstreiferdichtungsanordnung (10) nach Anspruch 11, wobei das Eiskratzer element (23) Aluminiumbronze und/oder Edelstahl umfasst.

15. Abstreiferdichtungsanordnung (10) nach Anspruch 1, wobei, wenn die Abstreiferdichtungsanordnung (10) zwischen einem Außengehäuse (41) und der Welle (20) des Kugelgewindetriebs (11) eingebaut ist, die Vorderseite (14) des Abstreiferelements (12) so ausgebildet ist, dass sie in Richtung einer Fettseite (42) angeordnet ist, und die Vorderseite (24) des Eiskratzerelements (23) so ausgebildet ist, dass sie in Richtung einer Umgebungsseite (43) angeordnet ist.

16. Abstreiferdichtungsanordnung (10) nach Anspruch 1, mit mindestens einem Finger (44), der sich parallel zur Längsachse (13) von der Rückseite (25) des Eiskratzerelements (23) in Richtung des Abstreiferelements (12) erstreckt.

17. Abstreiferdichtungsanordnung (10) nach Anspruch 16, mit mindestens einer in der Rückseite des Abstreiferelements (12) ausgebildeten Aussparung, wobei der mindestens eine Finger (44) des Eiskratzerelements (23) in der mindestens einen Aussparung (45) des Abstreiferelements (12) angeordnet ist und das Abstreiferelement (12) gegenüber dem Eiskratzerelement (23) mechanisch gegen Verdrehen sichert.

18. Abstreiferdichtungsanordnung (10) nach Anspruch 1, mit mindestens einer Lasche (46), die sich von der äußeren Umfangsfläche (26) des Eiskratzerelements (23) radial zur Längsachse (13) erstreckt, wobei die mindestens eine Lasche (46) so ausgebildet ist, dass sie in mindestens einer in einem Außengehäuse (41) ausgebildeten Aussparung (47) angeordnet ist und das Eiskratzerelement (23) gegenüber dem Außengehäuse (41) mechanisch gegen Verdrehen sichert.

## Revendications

1. Ensemble de joint racleur (10) configuré pour l'étanchéité d'un actionneur à vis à billes (11), comprenant :
un élément racleur (12) disposé de manière annulaire autour d'un axe longitudinal (13) ;
l'élément racleur (12) définissant une face avant (14) opposée à une face arrière (15), les faces avant et arrière (14, 15) étant généralement perpendiculaires à l'axe longitudinal (13) ;
l'élément racleur (12) définissant une surface circonférentielle externe (16) opposée à une surface circonférentielle interne (17), les surfaces circonférentielles externe et interne (16, 17) étant généralement parallèles à l'axe longitudinal (13) ;
dans lequel la surface circonférentielle interne (17) comprend une première extension hélicoïdale (18) s'étendant vers l'axe longitudinal (13), laquelle première extension hélicoïdale (18) est configurée pour être disposée dans un filet de vis à billes (19) d'un arbre (20) de l'actionneur à vis à billes (11), lequel arbre (20) est configuré pour être aligné le long de l'axe longitudinal (13) ; et
un élément brise-glace (23) disposé de manière annulaire autour de l'axe longitudinal (13);
l'élément brise-glace (23) définissant une face avant (24) opposée à une face arrière (25), les faces avant et arrière (24, 25) étant généralement perpendiculaires à l'axe longitudinal (13) ;
l'élément brise-glace (23) définissant une surface circonférentielle externe (26) opposée à une surface circonférentielle interne (27), les surfaces circonférentielles externe et interne (26, 27) étant généralement parallèles à l'axe longitudinal (13) ;
dans lequel la surface circonférentielle interne (27) comprend une seconde extension hélicoïdale (28) s'étendant vers l'axe longitudinal (13), laquelle seconde extension hélicoïdale (28) est configurée pour être disposée dans le filet de vis à billes (19) de l'arbre (20) de l'actionneur à vis à billes (11) ;
dans lequel la seconde extension hélicoïdale (28) s'étend jusqu'à la face avant (24) de l'élément brise-glace (23) formant une lèvre brise-glace (29) ;
dans lequel l'élément racleur (12) est disposé adjacent à l'élément brise-glace (23) avec la face arrière (15) de l'élément racleur (12) étant adjacente à la face arrière (25) de l'élément brise-glace (23) ; et
dans lequel l'élément racleur (12) et l'élément brise-glace (23) sont verrouillés mécaniquement en rotation l'un par rapport à l'autre ;
**caractérisé en ce que**
au moins une portion (21) de la première extension hélicoïdale (18) comprend une pluralité de micro-rainures (22) formées sur la surface circonférentielle interne (17), laquelle pluralité de micro-rainures (22) est configurée pour entrer en contact avec le filet de vis à billes (19) de l'arbre (20) de l'actionneur à vis à billes (11).

2. Ensemble de joint racleur (10) selon la revendication 1, dans lequel la pluralité de micro-rainures (22) est disposée de manière adjacente l'une à l'autre, chaque micro-rainure de la pluralité de micro-rainures (22) étant disposée de manière annulaire autour de l'axe longitudinal (13) et ne suivant pas un profil hélicoïdal.

3. Ensemble de joint racleur (10) selon la revendication 1, dans lequel la pluralité de micro-rainures (22) suit un profil hélicoïdal (30) qui est dans une direction hélicoïdale similaire (31) par rapport à la première extension hélicoïdale (18).

4. Ensemble de joint racleur (10) selon la revendication 1, dans lequel la pluralité de micro-rainures (22) suit un profil hélicoïdal (30) qui est dans une direction hélicoïdale opposée (32) par rapport à la première extension hélicoïdale (18).

5. Ensemble de joint racleur (10) selon la revendication 1, dans lequel la première extension hélicoïdale (18) est alignée hélicoïdalement par rapport à la seconde extension hélicoïdale (28), lesquelles première et seconde extensions hélicoïdales (18, 28) sont configurées pour être disposées dans le filet de vis à billes (19) de l'arbre (20) de l'actionneur à vis à billes (11).

6. Ensemble de joint racleur (10) selon la revendication 1, dans lequel le bord (33) de la lèvre brise-glace (29) est configuré pour être à une distance inférieure ou égale à 0,30 millimètre du filet de vis à billes (19) de l'arbre (20) de l'actionneur à vis à billes (11).

7. Ensemble de joint racleur (10) selon la revendication 1, dans lequel la face avant de l'élément racleur (12) comprend une gorge annulaire (34) formée en celle-ci et disposée autour de l'axe longitudinal (13).

8. Ensemble de joint racleur (10) selon la revendication 7, comprenant un élément ressort métallique de forme annulaire (35) disposé dans la gorge annulaire (34).

9. Ensemble de joint racleur (10) selon la revendication 8, dans lequel l'élément ressort (35) comprend un ressort en ruban plat (36).

10. Ensemble de joint racleur (10) selon la revendication 8, dans lequel l' élément ressort comprend une forme en U (37) en coupe transversale, dans laquelle l'ouverture supérieure (38) de la forme en U (37) est orientée le long de l'axe longitudinal (13) et à l'opposé de la face arrière (15) de l'élément racleur (12).

11. Ensemble de joint racleur (10) selon la revendication 8, dans lequel la face avant (14) de l'élément racleur (12) comprend une lèvre d'étanchéité de graisse de diamètre extérieur (39) et une lèvre d'étanchéité de graisse de diamètre intérieur (40) séparées par la gorge annulaire (34).

12. Ensemble de joint racleur (10) selon la revendication 1, dans lequel l'élément racleur (12) et l'élément brise-glace (23) ne sont pas constitués des mêmes matériaux.

13. Ensemble de joint racleur (10) selon la revendication 11,dans lequel l'élément racleur (12) comprend du PTFE, du PTFE non chargé, du PTFE mélangé, du PTFE chargé verre-molybdène, du PEEK et/ou un matériau thermoplastique.

14. Ensemble de joint racleur (10) selon la revendication 11, dans lequel l' élément brise-glace (23) comprend du bronze aluminium et/ou de l'acier inoxydable.

15. Ensemble de joint racleur (10) selon la revendication 1, dans lequel, lorsque l'ensemble de joint racleur (10) est installé entre un carter externe (41) et l'arbre (20) de l'actionneur à vis à billes (11), la face avant (14) de l'élément racleur (12) est configurée pour être disposée vers un côté graisse (42) et la face avant (24) de l'élément brise-glace (23) est configurée pour être disposée vers un côté environnemental (43).

16. Ensemble de joint racleur (10) selon la revendication 1, comprenant au moins un doigt (44) s'étendant parallèlement à l'axe longitudinal (13) depuis la face arrière (25) de l'élément brise-glace (23) vers l'élément racleur (12).

17. Ensemble de joint racleur (10) selon la revendication 16, comprenant au moins un évidement formé dans la face arrière de l'élément racleur (12), dans lequel au moins un doigt (44) de l'élément brise-glace (23) est disposé dans ledit au moins un évidement (45) de l'élément racleur (12) et verrouille mécaniquement en rotation l'élément racleur (12) par rapport à l'élément brise-glace (23).

18. Ensemble de joint racleur (10) selon la revendication 1, comprenant au moins une languette (46) s'étendant radialement à l'axe longitudinal (13) depuis la surface circonférentielle externe (26) de l'élément brise-glace (23), dans lequel ladite au moins une languette (46) est configurée pour être disposée dans au moins un évidement (47) formé dans un carter externe (41) et verrouille mécaniquement en rotation l'élément brise-glace (23) par rapport au carter externe (41).
